# EUROPÄISCHE PATENTANMELDUNG

(11) **EP 2 228 247 A2**
(43) Veröffentlichungstag der Anmeldung: **15.09.2010**
(21) Anmeldenummer: 10002544.4
(22) Anmeldetag: 11.03.2010
(51) Int. Cl.: B60J 7/12, B60J 10/10

(54) **Bewegliches Dach für ein Kraftfahrzeug**

(30) Priorität: 14.03.2009 DE 102009013278
(71) Anmelder: Magna Car Top Systems GmbH, 74321 Bietigheim-Bissingen (DE)
(72) Erfinder: Brod, Sabine, 74427 Fichtenberg (DE); Fischer, Thomas, 72074 Tübingen (DE)

(57) **Zusammenfassung**

Dieses bewegliche Dach (6) ist für ein Kraftfahrzeug, vorzugsweise einen Personenkraftwagen, ausgelegt, welches bewegliche Dach durch ein von einer Schließstellung (Schst) in eine Offenstellung und vice versa verstellbares und an einem Aufbau des Personenkraftwagens gelagertes Faltverdeck (7) gebildet wird, das einen von einer vorderen Dachkappe (12) gehaltenen Verdeckbezug (14) aufweist, wobei zwischen Dachkappe und einer Wand (15) eines oberen Querträgers (10) eines Windschutzscheibenrahmens (9) des Aufbaus ein an einer von der Dachkappe gehaltenen Tragleiste (17) befestigter Dichtkörper (16) vorgesehen ist.

Um das Faltverdeck zu optimieren, ragt die Tragleiste mit einem Haltesteg (18) in einen U-förmigen Halteabschnitt (19) des Dichtkörpers hinein und sie weist eine erste in Fahrtrichtung (B) gesehen offene U-förmige Aufnahme (20) für einen Profilkörpersteg (21) des Dichtkörpers auf.

## Beschreibung

Die Erfindung bezieht sich auf ein bewegliches Dach für ein Kraftfahrzeug, vorzugsweise einen Personenkraftwagen, nach dem Oberbegriff des Patentanspruchs 1,

Es ist ein Klapp- bzw. Faltverdeck für Fahrzeuge wie Cabriolets oder dgl. bekannt, EP 0 509 326 A1, das ein Verdeckgestell mit seitlichen Lenken umfasst. Das Verdeckgestell ist in einem vorderen Bereich mit einer als Windlaufspriegel bezeichneten vorderen Dachkappe versehen. Der Windlaufspriegel verläuft quer zur Fahrzeuglängsrichtung und verbindet gegenüberliegende Lenkerelemente des Verdeckgestänges. Im Querschnitt betrachtet wird der Windlaufspriegel durch ein Hohlprofil mit einem im Querschnitt hutförmigen Unterteil und einem flächigen Oberteil gebildet. Unterteil und Deckelteil sind an vorderen und hinteren Flanschen zusammengesetzt. Ein Verdeckbezug ist um den vorderen Flansch herumgeführt und an einem freien Ende mit einer Formleiste vernäht. Die Formleiste ist zusammen mit einer Befestigungsschiene an einer Haltwand des Winlaufspriegels unter Vermittlung von Schrauben gehalten. Die Befestigungsschiene ist -in Fahrtrichtung gesehen- in einem vorderen Bereich mit einem T-förmigen Endabschnitt versehen, der in eine korrespondierende Ausnehmung eines Dichtungsprofils eingreift. Das Dichtungsprofil ist zwischen Windlaufspriegel und einem Querholm eines Windschutzscheibenrahmens angeordnet, und es umfasst zwei schlauchartige Dichtabschnitte.

Aus der DE 295 09 880 U1 gehen Dichtungsprofile für ein Faltverdeck eines Cabriolets hervor. Dabei ist das Dichtungsprofil gemäß Fig. 4 ein Elastomerprofilstrang, der zwischen einem vorderen Bereich des Faltverdecks und einem Windschutzprofil vorgesehen ist. Das Dichtungsprofil ist mit einer Trägerschiene an einem Spriegelabschnitt durch Schrauben befestigt. Die Trägerschiene besitzt erste und zweite Schenkel, wobei an dem zweiten Schenkel ein erster Profilstrang angespritzt ist; an dem ersten Profilstrang ein zweiter Profilstrang. An dem Dichtungsprofil sind zwei schlauchartige Dichtelemente angeordnet, die mit im Winkel zueinander angeordneten Wandabschnitten des Windschutzprofils zusammenarbeiten.

Die US 5,042,873 gibt ein bewegliches Dach für ein Kraftfahrzeug wieder, welches Dach auf einer vorderen einem Windschutzscheibenrahmen zugekehrten Seite mit einer nach Art eines Hohlträger ausgebildeten Dachkappe versehen ist. Der Hohlträger umfasst einen äußeren und einen inneren Trägerabschnitt, die an einer Flanschvorrichtung zusammengesetzt sind. Von einer horizontalen Wand des inneren Trägerabschnitts weggeführt ist eine Winkelschiene, die mit einem flanschartigen Befestigungssteg ein Dichtungsprofil in Lage hält. Das Dichtungsprofil arbeitet mit einem schlauchartigen Dichtelemente mit einem Rahmenabschnitt des Windschutzscheibenrahmens zusammen.

Aufgabe der Erfindung ist es, ein bewegliches Dach in Gestalt eines Faltverdecks für einen Personenkraftwagen zu gestalten, das unter Vermittlung eines an einer vorderen Dachkappe angebrachten Dichtkörpers funktionsgerecht mit einem benachbarten Windschutzscheibenrahmen zusammenwirkt. Dabei sollte aber auch sichergestellt werden, dass die Halterung des Dichtkörpers am Faltverdeck bzw. an der Dachkappe sich bei einfachem Aufbau und leichter Montage mit vertretbarem Einsatz an Mitteln realisieren lässt.

Nach der Erfindung wird diese Aufgabe durch die Merkmale des Patenanspruchs 1 gelöst. Weitere die Erfindung ausgestaltende Merkmale sind in den Unteransprüchen enthalten.

Die mit der Erfindung hauptsächlich erzielten Vorteile sind darin zu sehen, dass die Tragleiste den Dichtkörper mit dem Haltesteg und der ersten U-förmigen Aufnahme sicher in Lage hält und dabei auch musterhaft mit der Dachkappe verbindbar ist. Dies wird noch durch die horizontale Ausrichtung des Haltestegs und der ersten Uförmigen Aufnahme unterstützt. Dabei ist als vorteilhaft hervorzuheben, dass mit der zweiten U-förmigen Aufnahme eine Innenverkleidung vorbildlich montier- und festlegbar ist. Die Tragleiste ist ein eine definierte Festigkeit aufweisendes Bauteil, das aufwandsarm herstellbar ist, Die Angliederung des oberen Schenkels der zweiten U-förmigen Aufnahme an der Rippenvorrichtung der Dachkappe bietet nicht nur eine wirkungsvolle Abstützung der Tragleiste, sondern ermöglicht auch eine hervorragende Verbindung der Tragleiste mit der Dachkappe, und zwar unter Vermittlung von Schrauben. Schließlich erfüllt die Anbindung des Dichtkörpers mit dem zweiten Dichtelement an den Verdeckbezug besondere Qualitätsansprüche. Zu letzteren tragen auch die Führung des zweiten Bezugsabschnitts entlang des horizontalen Kappenabschnitts und die Anbringung des U-förmigen Halteglieds und seine Verbindung mit dem Stegabschnitt der Dachkappe bei.

In der Zeichnung wird ein Ausführungsbeispiel der Erfindung gezeigt, das nachstehend näher erläutert wird.

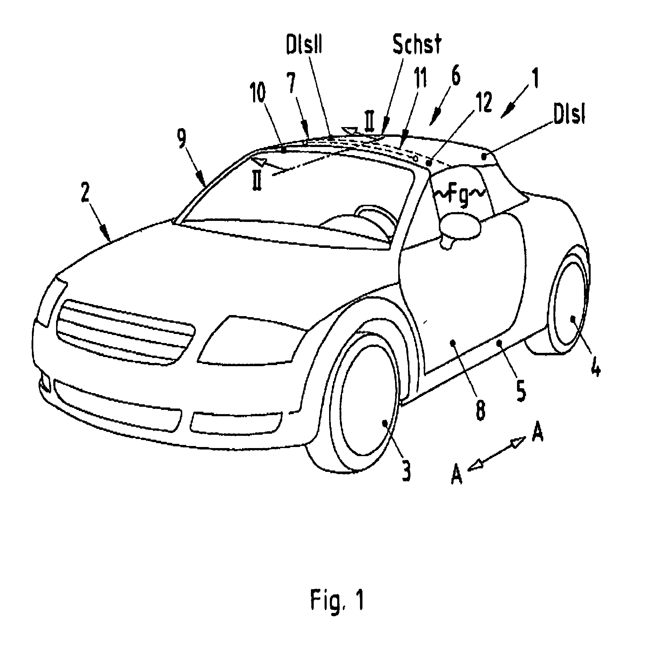

Es zeigen
Fig. 1 eine Schrägansicht von vorne links oben auf einen Personenkraftwagen mit einem beweglichen Dach in Gestalt eines Faltverdecks,

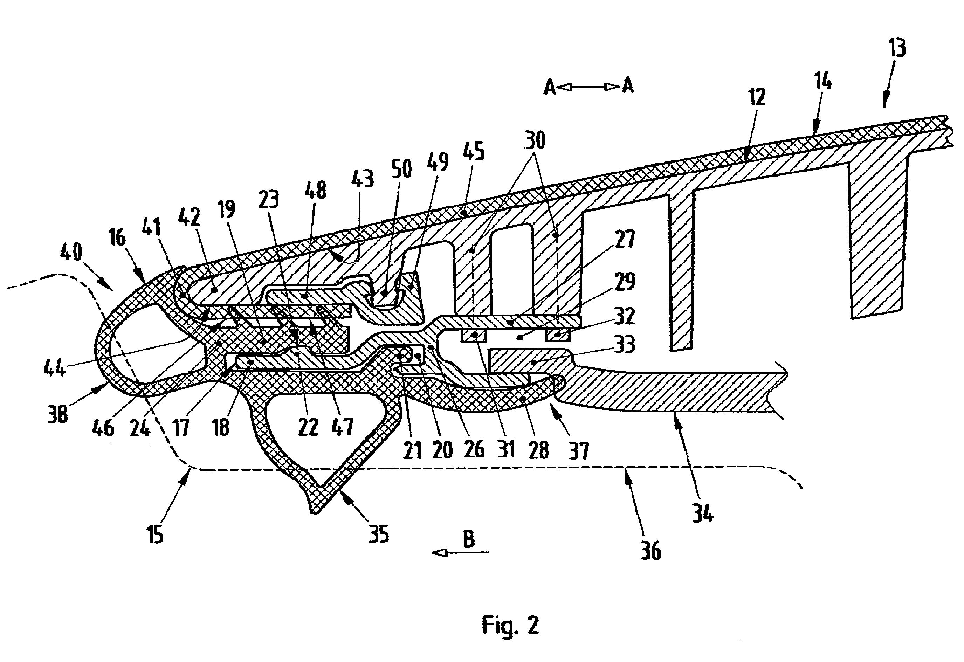

Fig. 2 einen Schnitt nach der Linie II-II der Fig. 1 in größerem Maßstab.

Ein Personenkraftwagen 1 umfasst einen Aufbau 2, der von Rädern 3 und 4 getragen wird und einen Grundkörper 5 und ein bewegliches von einer Schließstellung Schst in eine Offenstellung -nicht gezeigt- verstellbares Dach 6 umfasst, das als am Aufbau gelagertes Faltverdeck 7 ausgebildet ist. Am Grundkörper 5 gehalten sind Seitentüren 8 und ein Windschutzscheibenrahmen 9, der einen oberen Querträger 10 besitzt. Mit dem Querträger 10 verbunden ist ein vorderer Bereich 11, z.B. eine Dachkappe 12 des einen Fahrgastraum Fg in der Schließstellung Schst ütaerspannenden Faltverdecks 7; eine Fahrzeuglängsrichtung ist mit A-A bezeichnet.

Die Dachkappe 12 des Faltverdecks 7 trägt einen Teilabschnitt 13 eines flexiblen Verdeckbezugs 14. Zwischen Dachkappe 11 und einer Wand 15 des oberen Querträgers 10 des Windschutzscheibenrahmens 9 ist ein Dichtkörper 16 wirksam, der unter Vermittlung einer Tragleiste 17 an dieser Dachkappe 12 befestigt ist. Die Tragleiste 17 ragt mit einem Haltesteg 18 in einen U-förmigen Halteabschnitt 19 des Dichtkörpers 16 hinein. Dabei nimmt eine erste in Fahrtrichtung B gesehen offene U-förmige Aufnahme 20 der Tragleiste 17 einen Profilkörpersteg 21 des Dichtkörpers 16 auf. Der Profilkörpersteg 21 verläuft entgegengesetzt zu dem Haltesteg 18 der Tragleiste 17 bzw. dem Halteabschnitt 19, dergestalt, dass Haltesteg 18 und Profilkörpersteg 21 etwa auf einer gemeinsamen Ebene liegen. Der Haltesteg 18 greift mit einer örtlichen Erweiterung 22 in eine korrespondierende Ausnehmung 23 eines oberen Schenkels 24 des U-förmigen Halteabschnitts 19 des Dichtkörpers 16 ein.

Der Haltesteg 18 und der obere Schenkel 24 und ein unterer Schenkel 25 der ersten U-förmigen Aufnahme 20 sind horizontal ausgerichtet. Von einem Steg 26 der U-förmigen Aufnahme 20 sind obere und untere Schenkel 27 und 28 einer zweiten U-förmigen Aufnahme 29 weggeführt, die entgegen der Fahrtrichtung B betrachtet offen ist, welche Schenkel 27 und 28 ebenfalls horizontal ausgerichtet sind. Der obere Schenkel 27 der zweiten U-förmigen Aufnahme 29 liegt bspw. an einer Rippenvorrichtung 30, der aus Kunststoff, Leichtmetall oder dgl. bestehenden formsteifen Dachkappe 12 an, Zur Halterung des oberen Schenkels 27 und damit auch der Tragleiste 16 an der Dachkappe 12 dienen Schrauben 31 und 32, die in Gewindebohrungen der Rippenvorrichtung 30 bzw. Dachkappe 12 hineingedreht sind. Um die Montage der Schrauben 31 und 32 zu vereinfachen ist der untere Schenkel 28 kürzer als der obere Schenkel 27. Die Tragleiste 17 besteht aus Kunststoff, Metall oder dgl. und ist im Strangpressverfahren, wobei die zweite U-förmige Aufnahme 29 einen Rand 33 einer dem Fahrgastraum Fg zugewandten Innenverkleidung 34 aufnimmt,

Unterhalb des Haltestegs 18 der Tragleiste 17 ist der Dichtkörper 16 mit einem ersten schlauchförmigen Dichtelement 35 versehen, das sich auf einem horizontalen Wandabschnitt 36 der Wand 14 des oberen Querträgers 10 des Windschutzscheibenrahmens 9 abstützt. Von dem ersten Dichtelement 35 aus verläuft etwa in horizontaler Richtung, d.h. entgegen der Fahrtrichtung B, eine mit besagtem Dichtelement 35 vereinigte Lippe 37, die zum einen den unteren SchenKel 28 der zweiten U-förmigen Aufnahme 29 und zum anderen den Rand 33 der Innenverkleidung 34 abdeckt.

In Fahrtrichtung B gesehen ist vor der Tragleiste 17 bzw. dem Haltesteg 1 am Dichtkörper 16 ein zweites schlauchförmiges Dichtelement 36 angeformt, das mit einem zwar schrägen, jedoch aufrechten Wandabschnitt 39 der Wand 14 des Querträgers 10 des Windschutzscheibenrahmens kraftschlüssig zusammenarbeitet. Dabei ist das zweite Dichtelement 38 mit einem oberen Endabschnitt 40 an einen gerundeten Bereich 41 des die Dachkappe 12 umschließenden Verdeckbezugs 13 angeschlossen. Die Dachkappe 12 weist benachbart dem gerundeten Bereich 41 eine in Fahrtrichtung sich verjüngende Gestalt 42 mit einem schräg abfallenden Dachkappenabschnitt 43 und einem horizontalen Dachkappenabschnitt 44 auf. Hierbei folgt der Verdeckbezug 13 mit einem ersten Bezugsabschnitt 45 und einem zweiten Bezugsabschnitt 46 den Dachkappenabschnitten 43 und 44. Schließlich ist ein freier Bereich 47 des zweiten Bezugsabschnitts mit einem Befestigungsorgan 48 versehen, das mit einem U-förmigen Festsetzelement 49 einen aufrechten Stegabschnitt 50 umgreift.

## Patentansprüche

**1.** Bewegliches Dach für ein Kraftfahrzeug, vorzugsweise einen Personenkraftwagen, welches bewegliche Dach durch ein von einer Schließstellung in eine Offenstellung und vice versa verstellbares und an einem Aufbau des Personenkraftwagens gelagertes Faltverdeck gebildet wird, das einen von einer vorderen Dachkappe gehaltenen Verdeckbezug aufweist, wobei zwischen Dachkappe und einer Wand eines oberen Querträgers eines Windschutzscheibenrahmens des Aufbaus ein von einer an der Dachkappe gehaltenen Tragleiste befestigter Dichtkörper vorgesehen ist, **dadurch gekennzeichnet, dass** die Tragleiste (17) mit einem Haltesteg (18) in einen U-förmigen Halteabschnitt (19) des Dichtkörpers (16) hineinragt und eine erste in Fahrtrichtung (B) gesehen offene U-förmigen Aufnahme (20) für einen Profilkörpersteg (21) des Dichtkörpers (16) aufweist.

**2.** Bewegliches Dach nach Anspruch 1, **dadurch gekennzeichnet, dass** der Haltesteg (18) mit einer örtliche Erweiterung (22) in eine Ausnehmung (23) eines (24) Schenkels der U-förmigen Aufnahme (20) eingreift.

**3.** Bewegliches Dach nach Anspruch 1, **dadurch gekennzeichnet, dass** der Haltesteg (18) und der Schenkel der ersten U-förmigen Aufnahme (20) in etwa horizontal ausichtet sind.

**4.** Bewegliches Dach nach den Ansprüchen 1 und 3, **dadurch gekennzeichnet, dass** von einem Steg (26) der ersten U-förmigen Aufnahme (20) Schenkel (27 und 28) einer zweite U-förmigen Aufnahme (29) weggeführt sind, die entgegen der Fahrtrichtung (B) betrachtet offen ist.

**5.** Bewegliches Dach nach Anspruch 4, **dadurch gekennzeichnet, dass** die Schenkel (27 und 28) der zweiten U-förmigen Aufnahme (29) in etwa horizontal ausgerichtet sind.

**6.** Bewegliches Dach nach den Ansprüchen 1 und 5, **dadurch gekennzeichnet, dass** die Schenkel (27 und 28) der zweiten U-förmigen Aufnahme (29) als obere Schenkel (27) und als untere Schenkel (28) ausgeführt sind, wobei der obere Schenkel (28) an einer Rippenvorrichtung (30) der Dachkappe (12) anliegt.

**7.** Bewegliches Dach nach Anspruch 7, **dadurch gekennzeichnet, dass** der untere Schenkel (28) der zweiten U-förmigen Aufnahme (29) kürzer ist als der obere Schenkel (27).

**8.** Bewegliches Dach nach den Ansprüchen 6 und 7, **dadurch gekennzeichnet, dass** der obere Schenkel (27) der zweiten U-förmigen Aufnahme (29) unter Vermittlung von Schrauben (31 und 32) an der Rippenvorrichtung (30) in Lage gehalten wird.

**10.** Bewegliches Dach nach einem oder mehreren der vorangehenden Ansprüche, **dadurch gekennzeichnet, dass** die Tragleiste (17) aus Metall, Kunststoff oder dgl. besteht und z.B. im Strangpressverfahren hergestellt ist.

**11.** Bewegliches Dach nach den Ansprüchen 1 und 3, **dadurch gekennzeichnet, dass** unterhalb des Haltestegs (18) der Tragleiste (17) ein erstes schlauchförmiges Dichtelement (35) des Dichtkörpers (16) vorgesehen ist, das sich auf einem horizontalen Wandabschnitt (36) der Wand (15) des Querträgers (10) des Windschutzscheibenrahmes (9) abstützt.

**12.** Bewegliches Dach nach den Ansprüchen 6 bis 9 und 11, **dadurch gekennzeichnet, dass** von dem ersten Dichtelement (35) des Dichtkörpers (16) entgegen der Fahrtrichtung (8) eine an das erste Dichtelement (35) angeformte Lippe (37) weggeführt ist, die zum einen den unteren Schenkel (28) der zweiten U-förmigen Aufnahme (29) und zum anderen einen Rand (33) einer Innenverkleidung (34) abdeckt.

**13.** Bewegliches Dach nach den Ansprüchen 1 und 3, **dadurch gekennzeichnet, dass** in Fahrtrichtung (B) gesehen vor der Tragleiste (17) bzw. dem Haltesteg (18) am Dichtkörper (16) ein zweites Dichtelement (38) vorgesehen ist, das sich an einem aufrechten Wandabschnitt (39) der Wand (15) des Querträgers (10) des Windschutzscheibenrahmens (9) abstützt.

**14.** Bewegliches Dach nach Anspruch 13, **dadurch gekennzeichnet, dass** das zweite Dichtelement (38) mit oberem Endabschnitt (40) an einen gerundeten Bereich (41) des Verdeckbezugs (14) direkt und oberflächenbündig angeschlossen ist.

**15.** Bewegliches Dach nach den Ansprüchen 1 und 14, **dadurch gekennzeichnet, dass** die Dachkappe (12) hinter dem gerundeten Bereich (41) eine in Fahrtrichtung (B) sich verjüngende Gestalt (42) mit einem in Fahrtrichtung (B) abfallenden Dachkappenabschnitt (43) und einem horizontalen Dachkappenabschnitt (44) aufweist, wobei der Verdeckbezug (14) mit einem ersten Bezugsanschnitt (45) und einem zweiten Bezugsabschnitt (46) den Dachkappenabschnitten (43 und 44) folgt.

**16.** Bewegliches Dach nach Anspruch 15, **dadurch gekennzeichnet, dass** ein freier Bereich (47) des zweiten Bezugsabschnitts (46) mit einem Befestigungsorgan (48) versehen ist, das mit einem U-förmigen Festsetzelement (49) einen aufrechten Stegabschnitt (50) der Dachkappe (12) umgreift.
